# EUROPÄISCHE PATENTSCHRIFT

(11) **EP 1 206 149 B1**
(45) Veröffentlichungstag und Bekanntmachung des Hinweises auf die Patenterteilung: **15.02.2006**
(21) Anmeldenummer: 01126763.0
(22) Anmeldetag: 09.11.2001
(51) Int. Cl.: H04Q 7/34, H04B 17/00

(54) **Verfahren zur Überprüfung einer Funkverbindung**
Method for testing a radio link
Procédé de test pour un lien radio

(30) Priorität: 10.11.2000 DE 10055792
(43) Veröffentlichungstag der Anmeldung: 15.05.2002
(73) Patentinhaber: R & S BICK Mobilfunk GmbH, 31848 Bad Münder (DE)
(72) Erfinder: Zerbst, Hans-Ulrich, Dipl.-Ing., 31832 Springe (DE)
(74) Vertreter: Lins, Edgar

(56) Entgegenhaltungen:
- WO-A-97/23109
- WO-A-99/56418
- US-A- 6 035 183

## Beschreibung

Die Erfindung betrifft ein Verfahren zur isolierten Überprüfung einer Funkverbindung zwischen einem mobilen Gerät und einer Basisstation eine Mobilfunkanlage.

Mobilfunknetze sind regelmäßig darauf angelegt, möglichst flächendeckend eine Funkversorgung sicher zu stellen, sodass in der von dem Mobilfunknetz abgedeckten Region möglichst von allen Standorten sicher und störungsfrei der Kontakt mit der Basisstation hergestellt und ein Telefongespräch mit einem anderen Teilnehmer über die Basisstation geführt werden kann.

Durch eine noch nicht vollständige Funkabdeckung durch Basisstationen einerseits und durch ungünstige topographische Konstellationen oder ungünstige Bauwerksanordnungen andererseits wird immer wieder die Funkverbindung zwischen dem mobilen Gerät und der Basisstation für bestimmte Standorte so beeinträchtigt, dass keine oder keine einwandfreie Verbindung mehr von dem mobilen Gerät zur Basisstation herstellbar ist.

Es sind Systeme zur Funkabdeckungssimulation bekannt, mit denen die Problemregionen erfasst werden sollen, um ggfs. Maßnahmen zu ergreifen, die mangelnde Funkabdeckung zu vervollständigen. Die Funkabdeckungssimulation ist naturgemäß nicht vollständig aussagekräftig, sodass ein Bedürfnis dafür besteht, die Funkverbindung an einem Standort des mobilen Geräts zur nächstgelegenen Basisstation überprüfen zu können.

Es ist bekannt, zu diesem Zweck von der Basisstation aus eine Verbindung mit einem mobilen Gerät herzustellen und die Basisstation in einen Testmode zu schalten und ein Signal zum mobilen Gerät auszusenden. Auf diese Weise ist feststellbar, ob das mobile Gerät an einem bestimmten Standort ein Testsignal empfängt und ggfs. fehlerfrei empfängt. Vom Mobitgerät kann dann die Bitfehlerrate ermittelt werden.

Aufgrund der höheren Sendeleistung der Basisstation lässt dieser Test allerdings nur eine Abschätzung zu, ob auch von dem mobilen Gerät mit der geringen Sendeleistung von dem betreffenden Standort aus eine brauchbare Funkverbindung zur Basisstation herstellbar ist. Voraussetzung für die bekannte Überprüfung ist ferner, dass im System keine anderen mobilen Geräte (Teilnehmer) vorhanden sind. Eine Überprüfung im laufenden Betrieb ist daher nicht möglich.

In der WO 97/23109 ist ein Ortungsverfahren in einem mobilen Funknetz beschrieben.

Durch WO 99/56418 ist es bekannt, ausgehend von einem Mobilgerät die Funkverbindung zwischen Mobilgerät und Basisstation in beiden Richtungen, also Uplink und Downlink zu überprüfen, um Ungleichheiten zwischen Uplink und Downlink feststellen zu können. Die Linkbalance (LB)-Prüfung wird durch ein LB-Startsignal des Mobilfunkgeräts gestartet. Dadurch werden im mobilen Gerät wie auch in der Basisstation die jeweils empfangenen Signale hinsichtlich der Feldstärke (RSSI) und der Bitfehlerrate (BER) ausgewertet. Zur Zusammenführung der Messergebnisse werden die Messsignale von der Basisstation auf das mobile Geräte zurück übertragen, sodass am Mobilgerät alle Messinformationen zur Verfügung stehen und, beispielsweise nach Anschluss eines Computers an das Mobilgerät ausgewertet werden können. Die Durchführung der Messung erfolgt bis zur Beendigung durch die Aussendung eines LB-Stopsignals durch das Mobilgerät. Ein Feldingenieur kann mit dem Mobilgerät durch das Sendegebiet der Basisstation fahren und entsprechend den durchgeführten Messungen die Verbindungsgüte in dem Messgebiet kartieren. Für die Ermittlung der Verbindungsgüte gemäß diesem bekannten Verfahren ist ein Mobilgerät erforderlich, das nicht nur die Feldstärke (RSSI), sondern auch die Bitfehlerrate (BER) Messen und Auswerten kann. Es ist somit ein spezielles mobiles Gerät erforderlich, um die Messungen durchzuführen, deren Länge manuell oder durch einen angeschlossenen Computer gesteuert werden muss.

Die Kartierung der Verbindungsgüten ist für den Betreiber des Mobüfuriknetzes wichtig, um ggf. bestehende "Funklöcher" beseitigen zu können. Der einfache Benutzer eines mobilen Geräts innerhalb des Sendegebiets wird aber regelmäßig nicht über die aktuellen Informationen über die Verbindungsgüten an dem jeweiligen Standort verfügen.

Der Erfindung liegt daher die Problemstellung zugrunde, ein Verfahren der eingangs erwähnten Art anzugeben, das auch dem normalen Benutzer eines nicht speziell ausgebildeten mobilen Geräts ermöglicht, beispielsweise vor dem Anwählen einer Telefonnummer von einem aktuellen Standort aus, die Qualität der Funkverbindung von diesem Standort aus zu überprüfen.

Ausgehend von dieser Problemstellung ist das Verfahren der eingangs erwähnten Art erfindungsgemäß dadurch gekennzeichnet, dass ein nicht speziell für das Verfahren ausgebildetes mobiles Gerät verwendet wird, in dem lediglich ein vorbestimmtes Prüfsignal abgespeichert worden ist, von dem mobilen Gerät für die Durchführung der Überprüfung lediglich das vorbestimmte Prüfsignal an die Basisstation gesandt wird, das von der Basisstation empfangene Prüfsignal auf Feldstärke und / oder Bitfehler überprüft wird und das Ergebnis der Überprüfung in Form eines Ergebnissignals von der Basisstation auf das mobile Gerät übertragen wird.

Da normale mobile Geräte eine Feldstärkenanzeige für die empfangene Feldstärke (RSSI) aufweisen, liegt für den Nutzer des mobilen Geräts eine Information vor, ob seitens der Downlink-Verbindung eine ausreichende Feldstärke zur Verfügung steht. Mit dem erfindungsgemäßen Verfahren gelingt die aufgrund der geringeren Sendeleistung der mobilen Geräte kritischere Überprüfung der Uplink-Funkverbindung in einfacher Weise mit einem herkömmlichen mobilen Gerät. Vom mobilen Gerät wird lediglich ein vorbestimmtes Prüfsignal ausgesandt.

Durch ein geeignetes Protokoll erkennt die Basisstation den Empfang eines Prüfsignals und kann durch eine Softwareapplikation das empfangene Prüfsignal auf Feldstärke (Received signal strength indication - RSSI) und/oder Bitfehler überprüfen. Die Basisstation ermittelt die entsprechenden Parameter und überträgt diese als Ergebnissignal auf das mobile Gerät. Die erfindungsgemäße Überprüfung ist im normalen Betrieb des Mobilfunknetzes möglich.

Sowohl die Übertragung des Prüfsignals als auch des Ergebnissignals kann paketvermittelt vorzugsweise in Form eines Kurzdatentelegramms, also zum Beispiel als SMS oder SDS, übertragen werden. Das vom mobilen Gerät empfangene Kurzdatentelegramm enthält die gemessenen Werte, die als Klartext im Display des mobilen Geräts wiedergegeben werden können. Alternativ ist auch eine leitungsverrnittelte Datenübertragung als Datenstrom endlicher Länge (Circuit Mode Data) möglich.

Das erfindungsgemäße Verfahren ist geeignet, um festzustellen, ob von einem bestimmten Standort aus eine Funkübertragung von einem mobilen Gerät zur Basisstation fehlerfrei möglich ist. Das erfindungsgemäße Verfahren kann aber auch zur ständigen Qualitätskontrolle des Mobilfunknetzes oder zur erstmaligen Vermessung der Funkausbreitung in dem Mobilfunknetz verwendet werden. Für das erfindungsgemäße Verfahren sind keine speziellen mobilen Geräte und keine Messfahrzeuge erforderlich. Das erfindungsgemäße Verfahren erlaubt somit dem normalen Benutzer eines Mobilfunkgeräts, an einem beliebigen Ort und zu beliebiger Zeit vor der Benutzung des Mobilfunkgeräts die Qualität der Funkverbindung von dem aktuellen Standort aus zu überprüfen.

Zur Erstvermessung des Mobilfunknetzes und zur Qualitätssicherung können Ergebnissignale einer Vielzahl von verschiedenen Standorten Standortdaten dieser Standorte zugeordnet und abgespeichert werden, um so ggfs. aus den Ergebnissignalen und den Standortsignalen eine Funkabdeckungskarte zu generieren.

Dabei können die Standortdaten mit Hilfe eines Satelliten-Positionsbestimmungssystems, beispielsweise GPS, ermittelt werden.

Für eine leistungsstarke Abspeicherung und Auswertung der Ergebnissignale kann es vorteilhaft sein, das mobile Gerät mit einer Peripherieschnittstelle zu einem Rechner zu verbinden, um die Abspeicherung und Auswertung in dem Rechner vornehmen zu lassen. Für eine systematische Erstellung der Funkabdeckungsdaten kann es darüber hinaus zweckmäßig sein, den Rechner mit einem Satelliten-Positionsbestimmungssystem zu verbinden und die Überprüfung der Funkverbindung standortabhängig durch den Rechner auszulösen.

Die Funkabdeckungsdaten können in ein geographisches Informationssystem eingespeist werden oder auch mit einer Funkabdeckungssimulation verglichen werden, wodurch ein direkter Vergleich zwischen Simulation und Realität möglich ist.

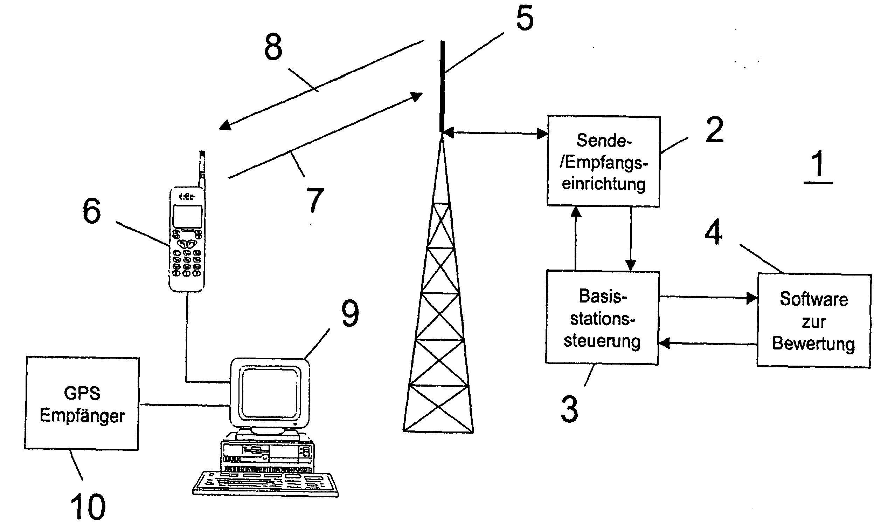

Die Erfindung soll im folgenden anhand eines in der Zeichnung dargestellten Ausführungsbeispiels näher erläutert werden.

In der Zeichnung ist schematisch eine Basisstation 1 dargestellt, die aus einer Sende-/Empfangseinrichtung 2 mit einer zugehörigen Antenne 5, einer Basisstationssteuerung 3 und einer Bewertungssoftware 4 für die Durchführung der vorliegenden Erfindung besteht.

Für den üblichen Betrieb eines Mobilfunknetzes werden zwischen der Basisstation 1 und einem mobilen Gerät 6 Funksignale ausgetauscht, und zwar vom mobilen Gerät 6 zur Basisstation 1 Uplink-Signale und in umgekehrter Richtung Downlink-Signale.

Zur Durchführung der vorliegenden Erfindung sendet das mobile Gerät 6 ein Prüfsignal 7 zur Basisstation 1. In der Basisstation 1 wird das empfangene Signal in der Basisstationssteuerung 3 mittels der Bewertungssoftware 4 überprüft und ein Ergebnis erstellt. Das Ergebnis wird von der Basisstation 1 als Ergebnissignal 8 auf das mobile Gerät 6 übertragen und kann dort beispielsweise im Display des mobilen Geräts 6 abgelesen werden. Zur Erstellung einer Funkabdeckungskarte ist das mobile Gerät 6 im dargestellten Ausführungsbeispiel über eine Peripherieschnittstelle mit einem Rechner 9 verbunden, dem ferner über eine weitere Schnittstelle Standortdaten eines GPS-Empfängers 10 zuführbar sind, wobei der GPS-Empfänger 10 in unmittelbarer Nähe des mobilen Geräts 6 angeordnet wird, damit die Positionsdaten des mobilen Geräts 6 vom Rechner 9 verarbeitet werden können. Neben der manuellen Auslösung der Überprüfung der Funkqualität kann auch eine automatische Auslösung durch den Rechner 9 in Abhängigkeit von den Standortdaten des GPS-Empfängers 10 vorgesehen sein.

## Patentansprüche

1. Verfahren zur isolierten Überprüfung einer Uplink-Funkverbindung zwischen einem mobilen Gerät (6) und einer Basisstation (1) einer Mobilfunkanlage, **dadurch gekennzeichnet, dass** ein nicht speziell für das Verfahren ausgebildetetes mobiles Gerät verwendet wird, in dem lediglich ein vorbestimmtes Prüfsignal (7) abgespeichert worden ist,
von dem mobilen Gerät (6) für die Durchführung der Überprüfung lediglich das vorbestimmte Prüfsignal (7) an die Basisstation (1) gesandt wird,
das von der Basisstation (1) empfangene Prüfsignal auf Feldstärke und / oder Bitfehler überprüft wird, und
das Ergebnis der Überprüfung in Form eines Ergebnissignals (8) von der Basisstation (1) auf das mobile Gerät (6) übertragen wird.

2. Verfahren nach Anspruch 1, **dadurch gekennzeichnet, dass** das vorbestimmte Prüfsignal (7) als Kurzdatentelegramm übermittelt wird.

3. Verfahren nach Anspruch 1 oder 2, **dadurch gekennzeichnet, dass** das Ergebnissignal (8) als Kurzdatentelegramm übermittelt wird.

4. Verfahren nach Anspruch 2 oder 3, **dadurch gekennzeichnet, dass** das Kurzdatentelegramm ein Short-Message-Service SMS oder Short-Data-Service SDS ist.

5. Verfahren nach einem der Ansprüche 1 bis 4, **dadurch gekennzeichnet, dass** das Ergebnissignal (8) für eine Vielzahl von verschiedenen Standorten Standortdaten dieser Standorte zugeordnet und abgespeichert wird.

6. Verfahren nach Anspruch 5, **dadurch gekennzeichnet, dass** die Standortdaten mit Hilfe eines Satelliten-Positionsbestimmungssystems (10) ermittelt werden.

7. Verfahren nach Anspruch 5 oder 6, **dadurch gekennzeichnet, dass** mit den Ergebnissignalen (8) und den Standortdaten eine Funkabdeckungskarte generiert wird.

8. Verfahren nach einem der Ansprüche 1 bis 7, **dadurch gekennzeichnet, dass** zur Abspeicherung und Auswertung des Ergebnissignals (8) das mobile Gerät (6) über eine Peripherieschnittstelle mit einem Rechner (9) verbunden wird.

9. Verfahren nach Anspruch 8, **dadurch gekennzeichnet, dass** der Rechner (9) mit einem Satelliten-Positionsbestimmungssystem (10) verbunden wird und die Überprüfung standortabhängig auslöst.

## Claims

1. Method for isolated checking of an uplink radio link between a mobile appliance (6) and a base station (1) in a mobile radio system, **characterized in that** a mobile appliance is used which is not designed specifically for the method and in which only one predetermined test signal (7) has been stored,
in order to carry out the check, the mobile appliance (6) just sends the predetermined test signal (7) to the base station (1),
the test signal which is received by the base station (1) is checked for field strength and/or bit errors, and
the result of the check is transmitted in the form of a result signal (8) from the base station (1) to the mobile appliance (6).

2. Method according to Claim 1, **characterized in that** the predetermined test signal (7) is transmitted as a short data message.

3. Method according to Claim 1 or 2, **characterized in that** the result signal (8) is transmitted as a short data message.

4. Method according to Claim 2 or 3, **characterized in that** the short data message is a short message service (SMS) or a short data service (SDS).

5. Method according to one of Claims 1 to 4, **characterized in that** the result signal (8) for a large number of different locations is associated with location data for these locations, and is stored.

6. Method according to Claim 5, **characterized in that** the location data is determined with the aid of a satellite position finding system (10).

7. Method according to Claim 5 or 6, **characterized in that** the result signals (8) and the location data are used to generate a radio coverage map.

8. Method according to one of Claims 1 to 7, **characterized in that**, in order to store and evaluate the result signal (8), the mobile appliance (6) is connected to a computer (9) via a peripheral interface.

9. Method according to Claim 8, **characterized in that** the computer (9) is connected to a satellite position finding system (10), and initiates the check as a function of the location.

## Revendications

1. Procédé pour tester de façon isolée une liaison radio montante entre un appareil mobile (6) et une station de base (1) d'une installation radio pour mobile, **caractérisé en ce qu'**un appareil mobile qui n'est pas spécialement conçu pour le procédé est utilisé, dans lequel seulement un signal de test (7) prédéfini a été mis en mémoire,
à partir duquel appareil mobile (6) pour effectuer le test, seulement le signal de test (7) prédéfini a été envoyé à la station de base (1),
le signal de test reçu par la station de base (1) est testé en ce qui concerne la puissance du champ et/ou les défauts de bit, et
le résultat du test est transmis sous la forme d'un signal de résultat (8) à partir de la station de base (1) vers l'appareil mobile (6).

2. Procédé selon la revendication 1, **caractérisé en ce que** le signal de test prédéfini (7) est émis sous forme de télégramme à données courtes.

3. Procédé selon la revendication 1 ou 2, **caractérisé en ce que** le signal de résultat (8) est émis sous forme de télégramme à données courtes.

4. Procédé selon la revendication 2 ou 3, **caractérisé en ce que** le télégramme à données courtes est un SMS (Short-Message-Service) ou un SDS (Short-Data-Service).

5. Procédé selon l'une des revendications 1 à 4, **caractérisé en ce que** le signal de résultat (8) est associé et mémorisé pour plusieurs positions et données de position pour ces positions.

6. Procédé selon la revendication 5, **caractérisé en ce que** les données de position sont déterminées au moyen d'un système de détection de position par satellite (10).

7. Procédé selon la revendication 5 ou 6, **caractérisé en ce que** grâce aux signaux de résultat (8) et les données de position, une carte de couverture radio est générée.

8. Procédé selon l'une des revendications 1 à 7, **caractérisé en ce que** pour la mémorisation et l'analyse des signaux de résultat (8) l'appareil mobile (6) est relié au moyen d'une interface périphérique avec un calculateur (9).

9. Procédé selon la revendication 8, **caractérisé en ce que** le calculateur (9) est relié avec un système de détection par satellite (10) et déclenche le test en fonction de la position.
